(19) Europäisches Patentamt / European Patent Office / Office européen des brevets

(11) **EP 1 221 206 B1**

(12) **FASCICULE DE BREVET EUROPEEN**

(45) Date de publication et mention de la délivrance du brevet:
**23.05.2012 Bulletin 2012/21**

(21) Numéro de dépôt: **01967410.0**

(22) Date de dépôt: **31.08.2001**

(51) Int Cl.:
***H04B 1/707*** (2011.01)

(86) Numéro de dépôt international:
**PCT/FR2001/002717**

(87) Numéro de publication internationale:
**WO 2002/019557 (07.03.2002 Gazette 2002/10)**

(54) **PROCEDE ET DISPOSITIF POUR DEMODULER DES SIGNAUX PROVENANT DE MULTI-UTILISATEURS**

VERFAHREN UND VORRICHTUNG ZUR DEMODULATION VON MEHREBENUTZERSIGNALEN

METHOD AND DEVICE FOR DEMODULATING SIGNALS FROM MULTIUSERS

(84) Etats contractants désignés:
**AT BE CH CY DE DK ES FI FR GB GR IE IT LI LU MC NL PT SE TR**

(30) Priorité: **01.09.2000 FR 0011198**

(43) Date de publication de la demande:
**10.07.2002 Bulletin 2002/28**

(73) Titulaire: **Thales**
**75008 Paris (FR)**

(72) Inventeurs:
- **ROUMY, Aline,**
  **THALES Intellectual Property**
  **F-94117 Arcueil Cedex (FR)**
- **PIREZ, Didier,**
  **THALES Intellectual Property**
  **F-94117 Arcueil Cedex (FR)**
- **FIJALKOW, Inbar,**
  **THALES Intellectual Property**
  **F-94117 Arcueil Cedex (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 5 414 699**

- **DUEL-HALLEN A: "A FAMILY OF MULTIUSER DECISION-FEEDBACK DETECTORS FOR ASYNCHRONOUS CODE-DIVISION MULTIPLE-ACCESS CHANNELS" IEEE TRANSACTIONS ON COMMUNICATIONS,US,IEEE INC. NEW YORK, vol. 43, no. 2/04, PART 01, 1 février 1995 (1995-02-01), pages 421-434, XP000506554 ISSN: 0090-6778**
- **KLEIN A ET AL: "ZERO FORCING AND MINIMUM MEAN-SQUARE-ERROR EQUALIZATION FOR MULTIUSER DETECTION IN CODE-DIVISION MULTIPLE-ACCESS CHANNELS" IEEE TRANSACTIONS ON VEHICULAR TECHNOLOGY,US,IEEE INC. NEW YORK, vol. 45, no. 2, 1 mai 1996 (1996-05-01), pages 276-287, XP000598095 ISSN: 0018-9545 cité dans la demande**

**Description**

L'invention concerne un procédé et un dispositif d'égalisation et de décodage de signaux numériques provenant de plusieurs utilisateurs.

L'invention s'applique dans un contexte CDMA (abréviation de code division multiple access) avec codage de canal.

Elle s'applique en particulier pour les systèmes radio-mobiles de troisième génération.

En transmission numérique, un récepteur peut être vu comme une succession de plusieurs fonctions élémentaires réalisant chacune un traitement spécifique tel que le filtrage, la démodulation, l'égalisation, le décodage,... etc.

La technique CDMA est une technique d'accès multiple qui sera à la base des systèmes radio-mobiles de troisième génération.

Cette technique est basée sur le principe de l'étalement de spectre : la transmission s'effectue à un débit beaucoup plus élevé qu'il est nécessaire pour chaque utilisateur, en multipliant les symboles utiles par des séquences de symboles à haut débit dites « séquences d'étalement ».

Toutes les transmissions s'effectuent ensuite à la même fréquence et aux mêmes instants, la séparation entre les utilisateurs étant obtenue par des séquences d'étalement différentes.

Dans les premières versions de systèmes CDMA, la démodulation se fait utilisateur par utilisateur. L'opération de « désétalement » qui consiste à multiplier à nouveau le signal reçu par la séquence d'étalement permet de ramener le signal dans sa bande utile d'origine, alors que les signaux des autres utilisateurs restent étalés ; ces « autres utilisateurs » sont vus comme un niveau de bruit et le gain de traitement, dit « gain d'étalement », est égal au rapport entre le débit utile et le débit de transmission. C'est ce gain de traitement qui permet à plusieurs utilisateurs de cohabiter dans la même bande.

Des techniques plus récentes tentent de démoduler tous les utilisateurs conjointement, en considérant les signaux provenant des autres utilisateurs autrement que comme du bruit. Ces techniques, quoi que souvent plus complexes, améliorent considérablement les performances par rapport à la technique standard et en particulier elles permettent de résoudre l'effet connu sous l'expression « near-far effect » inconvénient majeur résultant du fait que, si tous les mobiles émettent à la même puissance, un émetteur proche de la station de base s'approprie à lui seul la quasi-totalité de la capacité d'accès multiple dans la cellule empêchant les autres de communiquer. Pour éviter cela, les systèmes classiques nécessitent un contrôle de puissance performant sur chaque émetteur pour que les signaux soient reçus avec la même puissance à la station de base.

Différentes techniques de décodage sont connues de l'art antérieur.

Par exemple, les turbo-codes sont des codes correcteurs d'erreurs performants. La version de base utilise deux codes convolutionnels simples dont l'un reçoit les données à émettre et l'autre les données passées par un entrelaceur. Les sorties de ces deux codes sont ensuite multiplexées. A la réception, on itère un certain nombre de fois entre le décodage du premier et du deuxième code, chaque décodage fournissant des informations pondérées sur les bits utiles au décodage suivant. Les décodages successifs améliorent la connaissance que l'on a des bits à décider. Cette procédure itérative permet d'atteindre, avec des décodages élémentaires très simples, des performances atteintes avec des codes beaucoup plus complexes.

Dans la turbo-égalisation ou turbo-détection, le principe de traitement itératif est repris en utilisant un égaliseur et un décodeur séparés par un entrelaceur. Ce principe s'applique à la démodulation sur canal sélectif en fréquence qui nécessite comme premier étage de traitement un égaliseur. Par itération entre des étapes d'égalisation et des étapes de décodage, l'égaliseur bénéficie d'informations liées au code correcteur d'erreurs auxquelles il n'a pas accès normalement. De cette façon on tente de se rapprocher des performances du décodage conjoint optimal mettant en oeuvre l'égalisation plus le code correcteur, qui s'avère trop complexe de mise en oeuvre par la présence de l'entrelaceur.

Le turbo-CDMA applique le principe « turbo » aux transmissions CDMA codées. Plusieurs itérations entre un démodulateur multi-utilisateurs et un décodeur correcteur d'erreurs sont réalisées.

Différentes structures ont déjà été proposées pour améliorer la réception des signaux.

Le brevet FR 95/01603 divulgue une structure d'égalisation et de décodage conjoints avec itération en réception. Il est toutefois limité à un mono utilisateur. L'égaliseur utilisé est un égaliseur MAP (abréviation de Maximum a Posteriori) connu du domaine technique des turbo-codes ou des turbo-égaliseurs.

Le brevet FR 2.763.978 décrit un récepteur où l'égalisation est réalisée de la manière suivante : pour la première itération on utilise un égaliseur linéaire puis un annuleur d'interférence pour les suivantes. Si cette structure s'avère moins complexe que celle décrite dans le brevet FR 95/01603, elle ne permet toutefois pas de travailler dans des conditions optimales.

D'autres documents, par exemple :

- l'article de P.D. Alexander, M.C. Reed, J.A. Asenstorfer, C.B. Schlegel, «Iterative multiuser interference reduction : Turbo CDMA», IEEE Trans. Comm., Vol. 47, No. 7, pp. 1008-1014, July 1999, ou encore

- l'article de J. Hagenauer, «The Turbo principle : Tutorial introduction and state of the art», Int. Symp. on Turbo-codes, Brest, 1997, pp. 1-11,

décrivent des structures de récepteurs turbo-CDMA basés sur des égaliseurs MAP. Ces récepteurs sont des extensions au cas multi-utilisateur du Turbo-détecteur. Les traitements sont réalisés en parallèle et de manière figée pour chaque utilisateur : en effet, à chaque itération les traitements utilisent les résultats de l'itération précédente.

Le document de X.Wang et H.V. Poor ayant pour titre « Iterative (turbo) soft interference cancellation and decoding for coded CDMA », IEEE Trans. Comm., Vol.47, N°.7, pp 1046-1061, July 1999, divulgue un principe de récepteur turbo-CDMA avec annulation d'interférence à base de filtres. Cet égaliseur contient une généralisation de l'annuleur d'interférence utilisé en Turbo-égalisation au cas multi-utilisateur, suivi par un filtrage de Wiener. Le principe induit une certaine complexité puisqu'il nécessite l'inversion d'une matrice à chaque nouveau symbole à traiter.

L'article de Duel-Hallen "A family of multi-user decision feedback detection for asynchronous code-division multiple-access channels » IEEE transactions on communications, US, IEEE inc. New-York, vol. 42,n° 2/04 Part 01, 1 er février 1995, divulgue des récepteurs en flot continu, sous forme d'égaliseurs à décision dans la boucle. Le principe consiste à supprimer l'interférence des symboles passés déjà décidés, selon une méthode utilisée dans un DFE ordinaire, et en travaillant sur plusieurs utilisateurs. On peut utiliser à l'instant n, les décisions sur les utilisateurs déjà traités à l'instant n.

Enfin l'article de A. Klein, G. Kawas Kaleh, P. W. Baier, «Zéro forcing and minimum mean-square-error equalization for multiuser detection in CDMA channels», IEEE Trans. on Veh. Tech., Vol. 45, No. 2, pp. 276-287, March 1996 divulgue des structures d'égaliseurs multi-utilisateurs sans le décodage correcteur d'erreurs.

Le principe de l'invention est de proposer une nouvelle structure qui s'insère notamment dans un système turbo-CDMA. L'idée est de démoduler les utilisateurs les uns après les autres, une démodulation étant suivie d'un décodage d'erreurs. A l'issue d'une itération pour un utilisateur donné, qui correspond à une égalisation et à un décodage sur les symboles de l'utilisateur, on dispose d'une information fiable sur les symboles de l'utilisateur en question. Avant de démoduler un utilisateur, une première étape consiste à retrancher du signal reçu la contribution de l'ensemble des interférences des utilisateurs démodulés avant lui, déterminées à partir des informations sur les symboles décidés. Les utilisateurs qui n'ont pas encore été démodulés sont considérés comme du bruit dont la structure est connue notamment grâce à la connaissance des séquences d'étalement ou des paramètres de codage du signal à l'émission.

L'invention concerne aussi un procédé d'égalisation et de décodage comportant une étape où les utilisateurs sont ordonnés avant d'être traités.

L'invention concerne un dispositif d'égalisation et de décodage de signaux numériques de K utilisateurs, comportant K modules, chaque module comportant un égaliseur relié à un décodeur. Il est caractérisé en ce que :

un égaliseur de rang k est relié à plusieurs décodeurs de rang inférieur 1 à k-1, un égaliseur de rang k reçoit les symboles utiles des différents décodeurs, un n égaliseur peut comporter un premier bloc recevant au moins le signal à démoduler de l'utilisateur k et les estimées des symboles associés aux utilisateurs 1 à k-1 et un deuxième bloc adapté à retrancher la contribution des symboles passés déjà démodulés,
le premier bloc reçoit par exemple à une ième itération, au moins le signal de l'utilisateur k à démoduler, au moins les estimées des symboles associés aux utilisateurs 1 à k-1 correspondant à la ième itération et les estimées des symboles des utilisateurs k+1 à K obtenues à la (i-1)ième itération et le deuxième bloc les estimées des symboles de l'utilisateur k obtenues à la (i-1)ième itération, et
le dispositif peut comporter un dispositif permettant de déterminer un critère pour ordonner les utilisateurs.

L'invention concerne un procédé d'égalisation et de décodage de signaux numériques de K utilisateurs dans un récepteur comportant plusieurs modules comportant chacun au moins un égaliseur suivi d'un décodeur. Il est caractérisé en ce qu'il comporte au moins les étapes suivantes :

a) à l'itération 1, pour l'utilisateur d'indice 1 transmettre le signal à démoduler à un égaliseur de rang 1 puis à un décodeur de rang 1 afin d'obtenir des symboles modulés estimés de l'utilisateur k, et
pour les utilisateurs k d'indice différent de 1, transmettre le signal à démoduler à un égaliseur de rang k qui reçoit aussi les différents symboles modulés estimés issus d'au moins un des décodeurs de rang (k-1), le procédé comporte aussi plusieurs itérations et pour une itération différente de la première itération, l'étape b) consiste au cours d'une ième itération à transmettre à un premier bloc de l'égaliseur de rang k les symboles de l'utilisateur k à démoduler, les estimées des symboles des utilisateurs 1 à k-1 obtenues au cours de la ième itération et les estimées des symboles des utilisateurs k+1 à K obtenues au cours de la (i-1)ième itération et à un deuxième bloc de l'égaliseur les estimées des symboles de l'utilisateur k issues de la (i-1)ième itération, et le procédé comporte une étape où les utilisateurs k sont ordonnés avant d'être traités selon un critère tenant compte de la puissance liée à l'utilisateur k corrigée de la contribution des interférences intersymboles lié à lui-même et aux autres utilisateurs.

Le dispositif et le procédé selon l'invention s'appliquent pour démoduler un signal dans un cadre d'accès multiple à répartition spatiale et/ou une répartition par codes de type CDMA.

Le procédé de décodage selon l'invention et le dispositif ou récepteur adapté présentent notamment comme avantage de s'affranchir de l'interférence entre symboles de manière plus performante que l'art antérieur.

Le procédé et la structure du récepteur se révèlent aussi moins complexes que certaines méthodes de l'art antérieur utilisant des égaliseurs de type MAP (maximum a posteriori) ou des filtres de type Wiener qui nécessitent une inversion de matrice par estimation de symbole.

D'autres caractéristiques et avantages de l'invention apparaîtront à la lecture de la description donnée ci-après à titre illustratif et nullement limitatif en regard des figures où :

- la figure 1 schématise une chaîne de codage des signaux de K utilisateurs se partageant un canal de propagation,
- la figure 2 représente un exemple de structure d'un récepteur permettant de schématiser le problème à la réception,
- la figure 3 représente les étapes et les moyens mis en oeuvre par l'invention,
- la figure 4 représente une matrice modélisant le signal,
- la figure 5 représente un exemple de structure de l'égaliseur utilisé dans le procédé selon l'invention, et
- la figure 6 une autre variante de mise en oeuvre de l'invention.

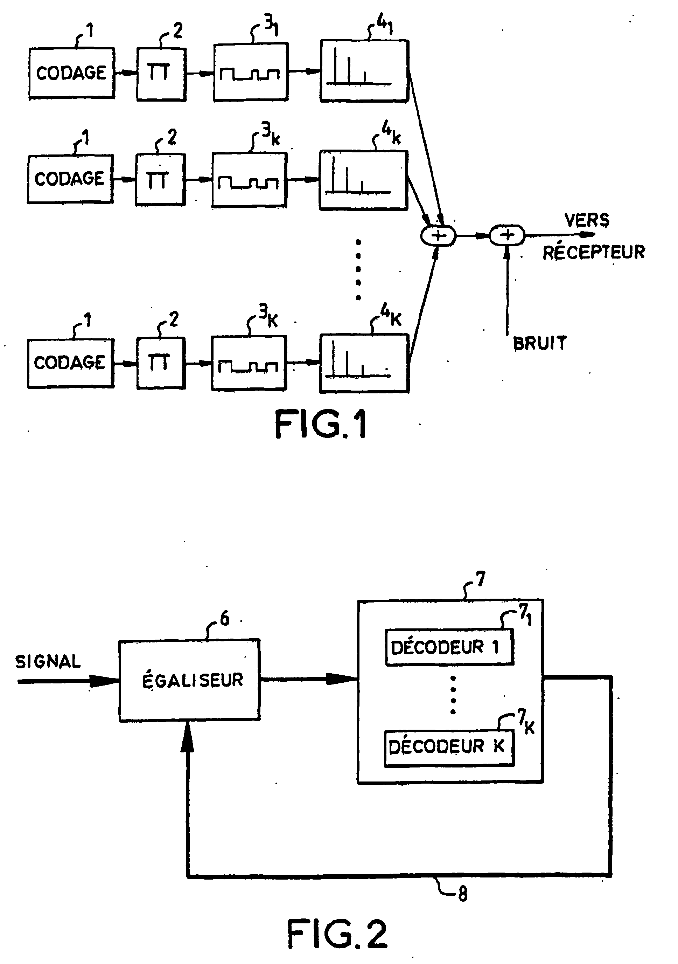

La figure 1 représente une chaîne de codage des signaux émis par K utilisateurs qui se partagent un même canal de propagation et qui utilisent des formes d'onde spectralement étalées à l'aide de codes, chaque utilisateur désigné par k, avec k variant de 1 à K, possède son propre code. Les utilisateurs sont considérés comme des utilisateurs asynchrones qui accèdent à un même canal de propagation sélectif en fréquence pour transmettre information.

Le signal numérique associé à l'utilisateur k est codé à l'aide d'un code correcteur 1 avant d'être transmis à un entrelaceur 2. Ces deux blocs fonctionnels peuvent être identiques ou bien différents pour chaque utilisateur k. Le code correcteur est par exemple de type convolutionnel, sans obligation toutefois.

Le signal codé est ensuite « étalé » à l'aide d'une séquence d'étalement $3_k$, l'indice k permet de désigner la séquence d'étalement spécifique pour chaque utilisateur k. Les séquences d'étalement différentes pour chaque utilisateur assurent ainsi la discrimination entre eux. Un signal modulé va voir un canal de propagation $4_k$ différent pour chaque utilisateur. Ceci correspond typiquement à la liaison montante d'un système radiomobile cellulaire. La notion de canal de propagation intègre par exemple les décalages temporels éventuels résultant d'une absence de synchronisation entre les K utilisateurs.

Le récepteur voit la somme des différentes contributions des signaux issus des différents canaux de propagation. A ces signaux peut s'ajouter du bruit thermique lié aux étages d'entrée du récepteur décrit ci-après ou encore de l'interférence provenant de signaux émis dans la même bande, par exemple les mobiles de cellules voisines utilisant la même fréquence.

Pour des raisons de simplification dans la description, les opérations de modulation, typiquement la mise en forme par un demi-filtre de Nyquist et la transmission par porteuse, qui sont connues de l'Homme du métier ne sont pas représentées sur la figure 1.

La figure 2 montre un schéma très général d'un récepteur.

Le signal composé de l'ensemble des symboles de tous les K utilisateurs arrive dans un égaliseur 6 multi utilisateurs avant d'être transmis dans un dispositif de décodage 7 comportant un ou plusieurs décodeurs $7_k$.

L'égaliseur 6 reçoit le signal des différents utilisateurs ainsi que des informations fournies par le bloc de décodage 7 sur les symboles codés par l'intermédiaire d'une liaison 8, excepté lorsqu'aucun décodage n'a été effectué. L'égaliseur 6 fournit en sortie des informations pondérées sur les symboles codés qui exploitent ces deux types d'information, typiquement les probabilités d'émission des différents symboles possibles.

Les fonctions de désentrelacement et de mise en forme des informations pondérées entre l'égaliseur et les décodeurs ne sont pas représentées sur la figure. Elles permettent par exemple de traduire les informations sur les symboles 8-aires en probabilités sur les bits dans le cas où la modulation est à 8 états et le code binaire.

Le ou les décodeurs $7_k$ reçoivent les informations de l'égaliseur et exploitent les informations liées au code correcteur d'erreurs afin de fournir des informations plus fiables sur les symboles utiles et donc les symboles codés. Par exemple pour un code convolutionnel, le décodeur peut être du type « MAP » (maximum a posteriori) et calcule les probabilités sur les symboles utiles à partir de la connaissance des probabilités sur les symboles codés.

Les informations pondérées sont ensuite réentrelacées et remises en forme pour être réinjectées dans le bloc « égaliseur ». L'étape d'entrelacement des données s'effectue selon une méthode connue de l'Homme du métier et ne sera pas détaillée. Une façon de procéder consiste par exemple à écrire les données colonne par colonne dans une matrice de dimension appropriée et de lire cette matrice ligne par ligne par exemple. Ceci permet avantageusement de répartir les erreurs éventuelles lors de l'étape de lecture du signal. La mise en forme s'effectue selon des méthodes classiques et connues de l'Homme du métier, ce qui explique pourquoi elles ne sont pas détaillées.

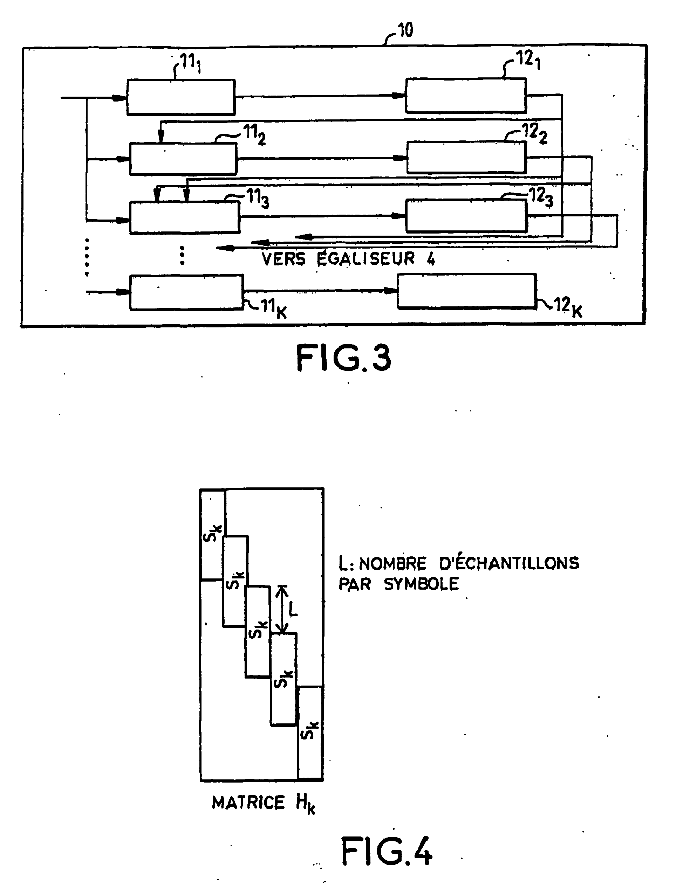

La figure 3 représente une structure de récepteur 10 selon l'invention comportant plusieurs égaliseurs $11_k$ et

plusieurs décodeurs 12 $_k$, l'indice $_k$ permet d'identifier un utilisateur. Le récepteur comporte donc autant de modules formés chacun d'un égaliseur et d'un décodeur qu'il n'y a d'utilisateurs.

Le signal comportant les symboles de tous les utilisateurs est reçu par chaque égaliseur 11 $_k$ du récepteur 10.

Etape a)

L'égaliseur de rang 1 référencé 11$_1$ reçoit par exemple les échantillons du signal à décoder, sans information a priori sur ses propres symboles ou sur les symboles des autres utilisateurs. L'information issue de cette première égalisation est transmise au décodeur de rang 1 désigné par 12$_1$ qui fournit une information plus fiable sur les symboles utiles et donc les symboles modulés de l'utilisateur.

Etape b)

L'information fiable sur les symboles utiles obtenue pour l'utilisateur 1 est ensuite transmise à l'égaliseur de rang 2, 11$_2$, qui reçoit aussi les échantillons du signal reçu à décoder. L'égaliseur permet ainsi de tenir compte de l'interférence liée à l'utilisateur de rang 1, tout en ne connaissant toujours rien à priori sur les symboles des utilisateurs de rang supérieur ou égal à 2. L'information de cette deuxième égalisation est ensuite transmise au décodeur de rang 2, 12$_2$, qui va fournir des informations sur les symboles utiles de l'utilisateur de rang 2.

L'étape b) est exécutée autant de fois qu'il y a d'utilisateurs de rang différent de 1, donc K-1 fois.

En généralisant, pour l'utilisateur d'indice k, les échantillons du signal sont transmis à l'égaliseur de rang k, 11$_k$, qui reçoit aussi les symboles utiles concernant les utilisateurs de rang 1 à k-1, issus des différents décodeurs 12$_1$,..., 12$_{k-1}$. L'égaliseur 11$_k$ prend ainsi en compte les interférences liées aux utilisateurs de rang 1 à (k-1) pour le décodage du signal lié à l'utilisateur k. L'information issue de cette kème égalisation est ensuite transmise au décodeur de rang k, 12 $_k$, qui va fournir des informations sur les symboles utiles de l'utilisateur de rang k.

Le dernier égaliseur possède des informations sur tous les autres utilisateurs.

Selon une variante de réalisation de l'invention, l'égaliseur utilisé présente une structure en deux parties. La première partie permet de soustraire pour un utilisateur k considéré, la participation des utilisateurs de rang 1 à k-1 et la deuxième partie correspond à une structure d'égaliseur à décision dans la boucle, en anglais DFE abréviation de « Decision Feedback Equaliser » présentant des caractéristiques données ci-après.

Le signal reçu par l'égaliseur peut être modélisé de la manière suivante décrite ci-après.

On suppose qu'un bloc d'échantillons reçus peut être rangé sous une forme vectorielle Z. Ce bloc d'échantillons est issu de la contribution des K utilisateurs, chacun d'eux contribuant avec N symboles codés.

La contribution d'un utilisateur d'indice k quelconque au signal reçu s'obtient, sans prendre en compte les opérations de modulation sur porteuse, par les opérations suivantes :

- étalement d'un facteur Q de chaque symbole codé,
- mise en forme, par exemple par un demi-filtre de Nyquist,
- filtrage par le canal de propagation par introduction de trajets multiples par exemple,
- filtrage anti-repliement en réception, et
- échantillonnage.

Le signal de l'utilisateur k avant échantillonnage s'écrit par exemple selon l'équation (1) suivante

$$z_k(t) = \sum_n a_{n,k} \sum_{q=1}^{Q} c_{q,k} \cdot (h \otimes p_k \otimes f)(t - qT_c - nT_s) \qquad (1)$$

Dans cette équation, h représente le filtre de mise en forme à l'émission, $p_k(t)$ le canal de propagation spécifique à un utilisateur k, f(t) le filtre de réception avant échantillonnage, $T_c$ la période chip inverse de la vitesse de modulation et $T_s$ la période symbole avant étalement. Les symboles $a_{n,k}$ sont les symboles codés de l'utilisateur k et les symboles $c_{q,k}$ sont les chips de la séquence d'étalement, n correspond à l'indice temporel du symbole codé et q à l'indice des chips ou symboles de la séquence d'étalement.

Le symbole

$\otimes$

représente la convolution.

Si on pose

$$s_k(t) = \sum_{q=1}^{Q} c_{q,k} \cdot (h \otimes p_k \otimes f)(t - qT_c) \qquad (2)$$

On peut écrire

$$z_k(t) = \sum_{n} a_{n,k} s_k(t - nT_s) \qquad (3)$$

L'équation (3) montre que la contribution de chaque utilisateur k peut se mettre sous la forme du filtrage d'un train de symboles par une certaine fonction $s_k(t)$ qui contient les effets de l'étalement, du filtre de mise en forme à l'émission, de la propagation et des filtres de réception avant l'échantillonnage.

Si on appelle $S_k$ le vecteur contenant les échantillons de $s_k(t)$, on peut réécrire le signal échantillonné pour l'utilisateur k de la manière suivante :

$$Z_k = H_k \cdot A_k \qquad (4)$$

Où $A_k$ est le vecteur des N symboles $a_{n,k}$ et $H_k$ une matrice construite à partir du vecteur Sk de la manière décrite à la figure 4.

Les colonnes de la matrice $H_k$ sont construites à partir de versions décalées de la séquence $S_k$, chaque colonne correspond à un nouveau symbole du vecteur $A_k$ et le décalage correspond au nombre d'échantillons par symbole. Le recouvrement entre les différentes versions décalées de $S_k$ correspond à la durée de la réponse impulsionnelle globale (filtres plus canal de propagation).

Le modèle complet peut donc s'écrire :

$$Z = \sum_{k=1}^{K} H_k A_k + W \qquad (5)$$

Dans cette équation (5), W est un vecteur de bruit lié aux interférences extérieures à la cellule et au bruit interne du récepteur.

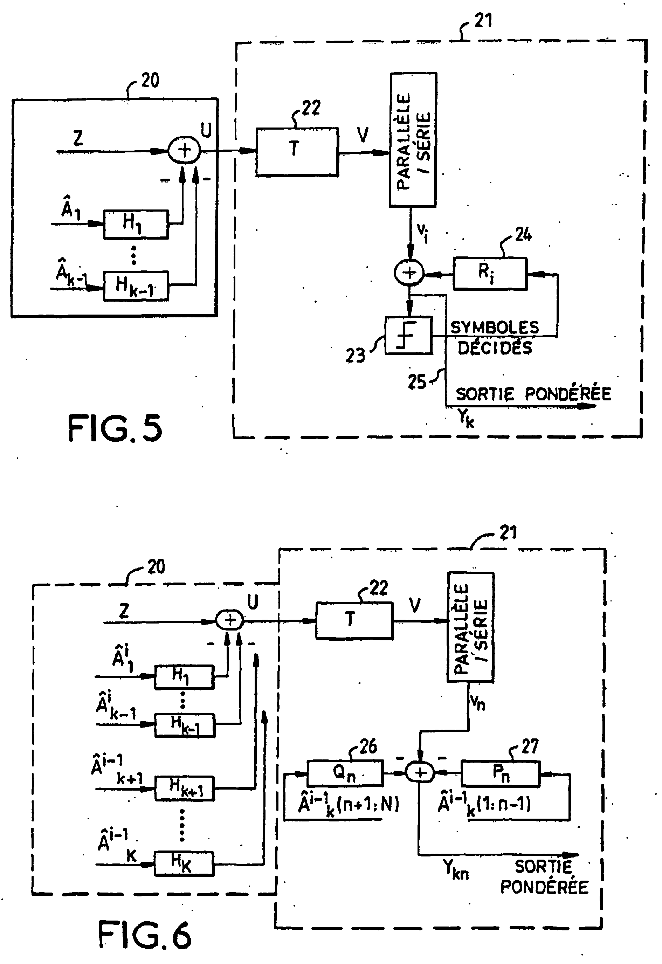

La figure 5 montre la structure d'un égaliseur fonctionnant en utilisant le principe de rebouclage décrit précédemment en relation avec la figure 3.

Lors de l'égalisation de l'utilisateur k, le premier bloc 20 a pour fonction de retrancher du signal reçu Z les contributions des utilisateurs d'indices compris entre 1 et k-1, c'est-à-dire des utilisateurs déjà traités. Pour ce faire il reçoit les vecteurs de symboles estimés correspondant à ces utilisateurs. L'estimée des symboles est effectuée par exemple en calculant l'espérance mathématique de la valeur du symbole à partir des probabilités obtenues lors des étapes de décodage.

Le deuxième bloc 21 a pour fonction de traiter l'interférence inter-symbole correspondant aux symboles de l'utilisateur k lui-même, et le bruit résultant des utilisateurs d'indices k+1 à K non encore traités et du bruit thermique. L'égaliseur a une structure DFE, c'est-à-dire qu'il est composé d'une partie "filtre transverse" et d'une partie "décision dans la boucle". La partie "filtre transverse" est calculée en prenant en compte la connaissance que l'on a de la structure du bruit générée par les utilisateurs non encore traités et par le bruit thermique. La partie "décision dans la boucle" a un fonctionnement séquentiel. Pour chaque symbole d'indice n de l'utilisateur courant, elle retranche la contribution des symboles d'indice inférieur déjà décidés.

Le deuxième bloc selon l'invention comporte par exemple un filtre transverse 22 telle qu'une matrice s'appliquant sur le vecteur U, le vecteur V résultant est échantillonné au rythme symbole. Les coordonnées $v_i$ de ce vecteur sont ensuite passées dans une boucle comportant un organe de décision 23 et un filtre récursif 24. L'organe de décision permet d'obtenir une décision sur les symboles. A chaque nouveau symbole le filtre récursif 24 retranche la contribution des symboles déjà décidés dans le bloc et renvoyés. La boucle comporte aussi une sortie pondérée 25 avant l'organe de décision qui permet de transmettre des symboles au décodeur.

Le calcul des filtres transverse 22 et récursif 24 s'effectue par exemple de la manière décrite ci-après.

Le calcul des filtres utilise comme critère la minimisation de l'erreur quadratique moyenne entre la sortie pondérée de l'égaliseur et le vecteur de symboles de l'utilisateur k

$$min(E(\|Y_k - A_k\|^2)) \qquad (6)$$

En reprenant l'équation (5), le vecteur U peut s'écrire de la manière suivante

$$U = H_k A_k + B$$
$$B = \sum_{l=k+1}^{K} H_l A_l + W \qquad (7)$$

Dans cette équation (7), le bruit est constitué des signaux émis par les utilisateurs non encore décodés de rang k+1 à K et du bruit additif initial W.

Pour un bruit blanc W, les expressions des filtres sont données ci-dessous :

La matrice de corrélation de B s'écrit

$$R_B = \sigma_A^2 \cdot \sum_{l=k+1}^{K} H_l H_l^\dagger + \sigma_W^2 \cdot Id \qquad (8)$$

Avec $\sigma_A^2$ la puissance des symboles de modulation, $\sigma_W^2$ la puissance du bruit et Id la matrice identité

- on définit la matrice Q par

$$Q = H_k^\dagger R_B^{-1} H_k + \frac{1}{\sigma_W^2} Id \qquad (9)$$

- on réalise la composition de Cholesky de cette matrice

$$Q = (\Sigma L)^\dagger (\Sigma L) \qquad (10)$$

dans l'équation (10), $\Sigma$ est une matrice diagonale et L une matrice triangulaire inférieure.

L'expression du filtre transverse qui minimise le critère (6) est

$$T = \Sigma^{-2} L^{-1\dagger} H_k{}^\dagger R_B^{-1} \qquad\qquad (11)$$

Le filtre récursif est déterminé par les lignes de (L-Id).

Selon un mode de réalisation de l'invention, le dispositif utilise un annuleur d'interférences lorsque l'ensemble des symboles à démoduler a fait l'objet d'au moins un décodage. Dans cette situation, à la différence de l'égaliseur à décision dans la boucle, lorsque l'on cherche à décider le symbole j de l'utilisateur k, l'ensemble des autres symboles du même utilisateur ou des autres utilisateurs peuvent être considérés comme connus, même si dans la pratique seules les estimées de ces symboles sont connues. Il est alors possible de retrancher totalement leur contribution.

La figure 6 schématise le principe de cet annuleur.

Par rapport au cas de l'égaliseur à décision dans la boucle de la figure 5, on dispose de plus d'informations sur tous les symboles provenant de l'itération i-1 pour certains utilisateurs, par exemple ceux d'indice 1 à k-1 et de l'itération i courante pour les d'autres utilisateurs d'indice k+1 à K.

Le principe mis en oeuvre consiste à :

- retrancher les contributions de tous les utilisateurs autres que l'utilisateur k en train d'être traité, en utilisant l'information la plus récente pour chacun d'eux, pour les utilisateurs d'indice 1 à k-1 les estimées des vecteurs des symboles lors de l'itération i et pour les utilisateurs d'indice k+1 à K l'information des estimées obtenues lors de l'itération (i-1), ceci étant réalisé dans le premier bloc 20 qui génère un vecteur U,
- filtrer les échantillons reçus pour l'utilisateur k dans le filtre T 22, le vecteur V résultant est ensuite échantillonné par exemple au rythme symbole,
- retrancher dans le deuxième bloc 21, pour un symbole n donné l'interférence inter-symbole résiduelle provenant des autres symboles de l'utilisateur k. La contribution des symboles 1 à n-1 sont déterminés par le filtre $P_n$, 26 et celle des symboles d'indice n+1 à N par un filtre $Q_n$, 27.

De cette façon par rapport à la boucle de décision, on dispose d'une information beaucoup plus riche que les symboles décidés précédents, à savoir des informations sur les symboles passés mais aussi futurs provenant de l'itération précédente.

Après les étapes de traitement, on passe à l'étape de décodage, puis on considère l'utilisateur suivant et la contribution de l'utilisateur k est retranchée en utilisant les résultats obtenus au cours de l'itération i et non plus i-1.

Les différentes étapes d'égalisation et de décodage peuvent avantageusement être apliquées sur un ensemble d'utilisateurs qui sont ordonnés selon un critère tenant compte de la puissance liée à un utilisateur à laquelle est retranchée la contribution des interférences intersymboles pour ce même utilisateur et pour les autres utilisateurs.

Ce critère est déterminé par exemple de la manière suivante :

- $h_{kl}$ désigne la lième colonne de la matrice $H_k$ décrite en relation avec la figure 4. Ce vecteur désigne en fait la réponse impulsionnelle globale du canal pour le lième symbole du bloc à démoduler de l'utilisateur k,
- le critère $C_k$ est déterminé de la manière suivante

$$C_k = \sum_{n=1}^{N} \left( h_{k,n}{}^\dagger h_{k,n} - \sum_{m \neq n} \left| h_{k,n}{}^\dagger h_{k,m} \right| - \sum_{j \neq k} \sum_{m} \left| h_{k,n}{}^\dagger h_{j,m} \right| \right)$$

où le symbole t désigne le conjugué transposé le premier terme correspond à la puissance liée à l'utilisateur k, le deuxième terme la contribution de l'utilisateur et le troisième terme la contribution aux interférences intersymboles pour tous les autres utilisateurs.

Ce calcul fait intervenir les corrélations entre les signaux correspondant aux différents symboles qu'ils soient émis par l'utilisateur k lui-même ou par les autres.

En fait la méthode mesure la distance existante au minimum entre deux symboles opposés en sortie d'un filtre adapté à la réponse impulsionnelle $h_{kn}$, quelles que soient les valeurs des autres symboles qui interfèrent.

Les utilisateurs sont rangés dans un ordre décroissant avant de mettre les étapes du procédé selon l'invention.

**Revendications**

1. Dispositif d'égalisation et de décodage de signaux numériques de K utilisateurs, comportant K modules, chaque module comportant un égaliseur relié à un décodeur, dans lequel :

   • un égaliseur de rang k (11 k) est relié à plusieurs décodeurs (12 k) de rang inférieur 1 à k-1 et un égaliseur (11 k) de rang k reçoit les symboles utiles issus des différents décodeurs ($12_1$..., 12 k),
   • un égaliseur comporte deux blocs (20) et (21), le premier bloc (20) reçoit au moins le signal à démoduler de l'utilisateur k et les estimées des symboles associés aux utilisateurs 1 à k-1 issus d'au moins un des décodeurs de rang (k-1) et le deuxième bloc (21) est adapté à retrancher la contribution des symboles passés déjà démodulés,
   • le premier bloc (20) reçoit à une ième itération, au moins le signal de l'utilisateur k à démoduler, au moins les estimées des symboles associés aux utilisateurs 1 à k-1 correspondant à la ième itération et les estimées des symboles des utilisateurs k+1 à K obtenues à la (i-1)ième itération et le deuxième bloc (21) les estimées des symboles de l'utilisateur k obtenues à la (i-1)ième itération, et **caractérisé**
   • **en ce qu'**il comporte un dispositif adapté à déterminer un critère pour ordonner les utilisateurs avant de transmettre les signaux au module d'égalisation et de décodage, le critère tenant compte de la puissance de l'utilisateur k ainsi que des interférences intersymboles pour l'utilisateur k lui-même et les autres utilisateurs.

2. Procédé d'égalisation et de décodage de signaux numériques de K utilisateurs dans un récepteur comportant plusieurs modules comportant chacun au moins un égaliseur suivi d'un décodeur comportant au moins les étapes suivantes :

   a) à l'itération 1, pour l'utilisateur d'indice 1 transmettre le signal à démoduler à un égaliseur de rang 1 puis à un décodeur de rang 1 afin d'obtenir des symboles modulés estimés de l'utilisateur k, et
   b) pour les utilisateurs k d'indice différent de 1, transmettre le signal à démoduler à un égaliseur de rang k qui reçoit aussi les différents symboles modulés estimés issus d'au moins un des décodeurs de rang (k-1), et le procédé comportant

   plusieurs itérations et pour une itération différente de la première itération, l'étape b) consiste au cours d'une ième itération à transmettre à un premier bloc de l'égaliseur de rang k les symboles de l'utilisateur k à démoduler, les estimées des symboles des utilisateurs 1 à k-1 obtenues au cours de la ième itération et les estimées des symboles des utilisateurs k+1 à K obtenues au cours de la (i-1)ième itération et à un deuxième bloc de l'égaliseur les estimées des symboles de l'utilisateur k issues de la (i-1)ième itération, et **caractérisé en ce que** le procédé comporte :

   une étape où les utilisateurs k sont ordonnés avant d'être traités selon un critère tenant compte de la puissance liée à l'utilisateur k corrigée de la contribution des interférences intersymboles lié à lui-même et aux autres utilisateurs.

3. Procédé selon la revendication 2 **caractérisé en ce que** le critère pour ordonner les utilisateurs est déterminé de la manière suivante :

$$C_k = \sum_{n=1}^{N} \left( h_{k,n}{}^\dagger h_{k,n} - \sum_{m \neq n} \left| h_{k,n}{}^\dagger h_{k,m} \right| - \sum_{j \neq k} \sum_m \left| h_{k,n}{}^\dagger h_{j,m} \right| \right)$$

   où $h_{kl}$ désigne la lième colonne d'une matrice $H_k$ construite à partir du vecteur contenant les échantillons du signal de l'utilisateur k, n l'indice temporel du symbole codé.

4. Utilisation du dispositif selon la revendication 1 et du procédé selon l'une des revendications 2 à 3 pour démoduler un signal dans un cadre d'accès multiple à répartition spatiale et/ou une répartition par codes de type CDMA.

**Claims**

1. A device for equalising and decoding digital signals from K users, comprising K modules, each module comprising an equaliser that is linked with a decoder, wherein:

• an equaliser (11 k) of rank k is linked with several decoders (12 k) of lower rank 1 to k-1 and an equaliser (11 k) of rank k receives the useful symbols that originate from the various decoders ($12_1$..., 12k),
• an equaliser comprises two blocks (20) and (21), the first block (20) receives at least the signal to be demodulated from the user k and the estimates of the symbols associated with users 1 to k-1 that originate from at least one of the decoders of rank (k-1) and the second block (21) is designed to reduce the contribution of the past symbols that have already been demodulated,
• the first block (20) receives, at an nth iteration, at least the signal of the user k that is to be demodulated, at least the estimates of the symbols associated with users 1 to k-1 corresponding to the nth iteration and the estimates of the symbols of users k+1 to K that are obtained at the n(i-1)th iteration and the second block (21) receives the estimates of the symbols of the user k that are obtained at the n(i-1)th iteration, and **characterised in that** it comprises:

a device that is designed to determine a criterion for ordering the users before transmitting the signals to the equalisation and decoding module, the criterion taking into account the power of the user k as well as the inter-symbol interferences for the user k itself and the other users.

2. The method for equalising and decoding digital signals from K users in a receiver comprising several modules, each comprising at least one equaliser followed by a decoder, which method comprises at least the following steps:

a) transmitting, at iteration 1, for the user of index 1, the signal to be demodulated to an equaliser of rank 1 and then to a decoder of rank 1 so as to obtain estimated modulated symbols of the user k, and
b) transmitting, for the users k of an index other than 1, the signal to be demodulated to an equaliser of rank k that also receives the various estimated modulated symbols that originate from at least one of the decoders of rank (k-1), and the method comprising several iterations and for an iteration that is different from the first iteration, step b) comprises transmitting, during an nth iteration, to a first block of the equaliser of rank k the symbols of the user k to be demodulated, the estimates of the symbols of users 1 to k-1 that are obtained during the nth iteration and the estimates of the symbols of users k+1 to K that are obtained during the n(i-1)th iteration and transmitting to a second block of the equaliser the estimates of the symbols of the user k that originate from the n(i-1)th iteration, and **characterised in that** the method comprises:

a step in which the users k are ordered before being processed according to a criterion that takes into account the power associated with the user k that is corrected by the contribution of the inter-symbol interferences associated with itself and to the other users.

3. The method according to claim 2, **characterised in that** the criterion for ordering the users is determined as follows:

$$C_k = \sum_{n=1}^{N} \left( h_{k,n}{}^{\dagger} h_{k,n} - \sum_{m \neq n} \left| h_{k,n}{}^{\dagger} h_{k,m} \right| - \sum_{j \neq k} \sum_{m} \left| h_{k,n}{}^{\dagger} h_{j,m} \right| \right)$$

where $h_{kl}$ designates the nth column of a matrix $H_k$ that is constructed on the basis of the vector containing the samples of the signal of the user k, n designates the temporal index of the coded symbol.

4. The use of the device according to claim 1 and of the method according to any one of claims 2 to 3 for demodulating a signal in a space division multiple access context and/or a division by codes of the CDMA type.

**Patentansprüche**

1. Vorrichtung zum Entzerren und Decodieren von digitalen Signalen von K Benutzern, die K Module umfasst, wobei jedes Modul einen mit einem Decoder gekoppelten Entzerrer umfasst, wobei:

• ein Entzerrer (11 k) von Rang k mit mehreren Decodern (12 k) von niederem Rang 1 bis k-1 gekoppelt ist und ein Entzerrer (11 k) von Rang k die von den verschiedenen Decodern ($12_1$..., 12k) kommendennützlichen Symbole empfängt,

• ein Entzerrer zwei Blöcke (20) und (21) umfasst, wobei der erste Block (20) wenigstens das zu demodulierende Signal vom Benutzer k und die von wenigstens einem der Decoder von Rang (k-1) kommenden Schätzungen von mit den Benutzern 1 bis k-1 assoziierten Symbolen umfasst und der zweite Block (21) zum Verringern des Beitrags der vergangenen bereits demodulierten Symbole ausgelegt ist,
• der erste Block (20), bei einer n-ten Iteration, wenigstens das zu demodulierende Signal vom Benutzer k, wenigstens die Schätzungen der mit den Benutzern 1 bis k-1 assoziierten Symbole entsprechend der n-ten Iteration und die bei der (n-1)ten Iteration erhaltenen Schätzungen der Symbole von den Benutzern k+1 bis K empfängt und der zweite Block (21) die bei der (n-1)ten Iteration erhaltenen Schätzungen der Symbole des Benutzers k empfängt, und **dadurch gekennzeichnet, dass** sie eine Vorrichtung zum Bestimmen eines Kriteriums zum Einordnen der Benutzer vor dem Senden der Signale zum Entzerrungs- und Decodiermodul umfasst, wobei das Kriterium die Leistung des Benutzers k sowie die Intersymbol-Interferenzen für den Benutzer k selbst und die anderen Benutzer berücksichtigt.

2. Verfahren zum Entzerren und Decodieren digitaler Signale von K Benutzern in einem Empfänger, der mehrere Module umfasst, die jeweils wenigstens einen Entzerrer gefolgt von einem Decoder umfassen, wobei das Verfahren wenigstens die folgenden Schritte beinhaltet:

a) Senden, bei Iteration 1, für den Benutzer von Index 1,des zu demodulierenden Signals zu einem Entzerrer von Rang 1 und dann zu einem Decoder von Rang 1, um geschätzte modulierte Symbole des Benutzers k zu erhalten, und
b) Senden, für die Benutzer k mit einem anderen Index als 1, des zu demodulierenden Signals zu einem Entzerrer von Rang k, der auch die verschiedenen geschätzten, von wenigstens einem der Decoder von Rang (k-1) kommenden modulierten Symbole empfängt, und wobei das Verfahren
mehrere Iterationen umfasst und Schritt b) für eine sich von der ersten Iteration unterscheidende Iteration das Senden, im Laufe einer n-ten Iteration, der zu demodulierenden Symbole des Benutzers k, der im Laufe der n-ten Iteration erhaltenen Schätzungen der Symbole der Benutzer 1 bis k-1 und der im Laufe der (n-1)-ten Iteration erhaltenen Schätzungen der Symbole der Benutzer k+1 bis K zu einem ersten Block des Entzerrers von Rang k und das Senden der von der (n-1)-ten Iteration kommenden Schätzungen der Symbole des Benutzers k zu einem zweiten Block des Entzerrers beinhaltet, und **dadurch gekennzeichnet, dass** das Verfahren Folgendes beinhaltet:

einen Schritt, bei dem die Benutzer k vor der Verarbeitung nach einem Kriterium eingeordnet werden, das die mit dem Benutzer k assoziierte Leistung berücksichtigt, die von dem Beitrag der mit sich selbst und mit den anderen Benutzern assoziieren Intersymbol-Interferenzen korrigiert wird.

3. Verfahren nach Anspruch 2, **dadurch gekennzeichnet, dass** das Kriterium zum Einordnen der Benutzer wie folgt ermittelt wird:

$$C_k = \sum_{n=1}^{N} \left( h_{k,n}{}^\dagger h_{k,n} - \sum_{m \neq n} \left| h_{k,n}{}^\dagger h_{k,m} \right| - \sum_{j \neq k} \sum_{m} \left| h_{k,n}{}^\dagger h_{j,m} \right| \right)$$

wobei $h_{kl}$ die n-te Spalte einer Matrix $H_k$, die auf der Basis des Vektors konstruiert wird, der die Samples des Signals des Benutzers k enthält, n den zeitlichen Index des codierten Symbols bezeichnet.

4. Verwendung der Vorrichtung nach Anspruch 1 und des Verfahrens nach einem der Ansprüche 2 bis 3 zum Demodulieren eines Signals in einem Mehrfachzugriffskontext mit räumlicher Aufteilung und/oder mit einer Aufteilung nach Codes des CDMA-Typs.

FIG.1

FIG.2

FIG.3

L: NOMBRE D'ÉCHANTILLONS PAR SYMBOLE

MATRICE $H_k$

FIG.4

FIG.5

FIG.6

14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 9501603

- FR 2763978

**Littérature non-brevet citée dans la description**

- **P.D. Alexander ; M.C. Reed ; J.A. Asenstorfer ; C.B. Schlegel.** Iterative multiuser interference reduction : Turbo CDMA. *IEEE Trans. Comm.,* Juillet 1999, vol. 47 (7), 1008-1014
- **J. Hagenauer.** The Turbo principle : Tutorial introduction and state of the art. *Int. Symp. on Turbo-codes, Brest,* 1997, 1-11
- **X.Wang ; H.V. Poor.** Iterative (turbo) soft interference cancellation and decoding for coded CDMA. *IEEE Trans. Comm.,* Juillet 1999, vol. 47 (7), 1046-1061

- A family of multi-user decision feedback detection for asynchronous code-division multiple-access channels. **Duel-Hallen.** IEEE transactions on communications. IEEE inc, 01 Février 1995, vol. 42
- **A. Klein ; G. Kawas Kaleh ; P. W. Baier.** Zéro forcing and minimum mean-square-error equalization for multiuser detection in CDMA channels. *IEEE Trans. on Veh. Tech.,* Mars 1996, vol. 45 (2), 276-287